# EUROPEAN PATENT SPECIFICATION

(11) **EP 0 992 772 B1**
(45) Date of publication and mention of the grant of the patent: **06.08.2008**
(21) Application number: 99402476.8
(22) Date of filing: 08.10.1999
(51) Int. Cl.: G01J 5/04, F16M 11/12

(54) **Mounting and control system for optical imaging systems**
Halterungs- und Kontrollsystem für optische Abbildungssysteme
Système de fixation et de contrôle pour appareils d'imagerie optique

(30) Priority: 09.10.1998 US 103840 P
(43) Date of publication of application: 12.04.2000
(73) Proprietor: Thales Optronique Canada Inc., Montreal, QC H4M 2L5 (CA)
(72) Inventor: Emanuel, Michael, Thomson-CSF Prop. Intel. Dpt. BV, 94117 Arcueil Cedex (FR); Kovacevic, Branislav, Thomson-CSF P.I.D.BV., 94117 Arcueil Cedex (FR); Faina-Cherkaoui, Marcela, Thomson-CSF P.I.D.BV., 94117 Arcueil Cedex (FR); Caron, Hubert, Thomson-CSF P.I.D.BV., 94117 Arcueil Cedex (FR); Wrobel, Leslie, Thomson-CSF P.I.D.BV., 94117 Arcueil Cedex (FR); Labrie,Marcel, c/o Thomson-CSF P.I.D.BV., 94117 Arcueil Cedex (FR)
(74) Representative: Brochard, Pascale

(56) References cited:
- US-A- 3 509 792
- US-A- 3 888 563
- US-A- 5 729 016

## Description

The present invention relates generally to viewing systems, and more particularly to a mount and control for a driver viewer enhancement system.

In recent years thermal imaging systems, based on uncooled detector arrays, have come to be an important aid in driving at night and under adverse weather and battlefield conditions. These systems are generally known as driver viewer enhancement (DVE) systems. The application of such DVE systems in combat vehicles has caused problems that are derived from the fact that the DVE system is typically configured in a periscope fashion. The openings in the vehicle armor are typically rectangular in shape and approximately 6.4cm (2.5 inches) wide by 15.2 to 25.4 cm (6 to 10 inches) long. The DVE systems normally replace periscope day sights in these openings. The DVE systems typically include a head protruding out of the armor through a mounting block adaptor. The head consists of a window, a folding mirror, and three or more lenses. An elevation control mechanism is required for the folding mirror to provide a wide field of regard. The optics (lenses) are placed vertically in a cylinder neck within the mounting block, thereby permitting azimuth movement of the periscope. A seal is required in the neck. The uncooled detector array and electronics are in a housing under the mounting block inside the vehicle.

One problem with such periscope based systems is that they are more costly due to the need for extra optical elements, i.e., a folding mirror, an actuation mechanism, and a window. It is advantageous to reduce the cost of such a system. A unique new configuration is needed that utilizes a forward looking (telescopic) sensor instead of a system using periscope architecture.

A second problem with periscope based systems is the large amount of space they require and the limited number of mounting positions that are possible with such a configuration. It is desirable that the sensor module be as small as possible to allow maximum flexibility in mounting the unit in armored vehicles. In some vehicles the protruding housing underneath the mounting block adaptor of a periscope based system obstructs hatch movement and driver egress.

The patent US 3 888 563 describes an arrangement for supporting an observation and measuring stand in the top of a vehicle so as to be swingable like a pendulum in all directions.

The patent US 3 509 792 discloses a ball mount for mounting guns in armored vehicles : it is adapted to receive a sight block.

These documents do not disclose a detector with electronics.

The patent US 5 729 016 describes a night vision system for use with non-military vehicles. The system includes a night vision camera mounted on top of the vehicle, and a mechanism for adjusting the pointing angle of the night vision camera. The pointing mechanism includes a joystick that sends electronic signals to a motor drive assembly that moves the night vision camera. This document does not disclose mechanical interconnection between a controllable optical imaging sensor module located external of the vehicle and an operator control located internal of the vehicle

An object of the present invention is to provide a cost effective driver viewer enhancement system. This object is achieved through the use of a mounting and control system that provides for a forward looking (telescopic) sensor instead of a system using periscope architecture.

An additional object of the present invention is to provide a compact mounting and control system for a driver viewer enhancement system that provides for maximum flexibility in mounting the unit within a vehicle. This object is achieved through the advantageous use of a mounting block adaptor for the sensor module that is simple and cost effective in construction to permit quick and easy installation and removal in a vehicle opening, simple environmental sealing, independent elevational and rotational (or azimuth) movement, simple one hand operation, and low mounting block control adaptor cost. According to the invention there is provided a mounting and control system as set out in claim 1. Preferred x features are set out in claims 2 to 8.

In a particularly preferred embodiment, the invention provides for mechanical interconnection between a controllable optical imaging sensor module located external of a vehicle and an operator control located internal of the vehicle that includes an orthogonal journal arrangement for facilitating internal operator control of the sensor module. The sensor module is supported by a tube that is interconnected to a sleeve bearing by a ball and socket joint that provides for the limited pivotal adjustment of the module about a horizontal axis. The sleeve bearing is supported by a mounting block, which provides for rotational adjustment of the sensor module about a vertical axis. The sleeve bearing has a generally cylindrical outer surface, and an inner hollow region having rectangular and trapezoidal cross-sectional configurations that extend within two vertical perpendicular planes. The tube is free to pivot within the sleeve bearing in the plane including the trapezoidal cross-section only, thereby providing for elevational adjustment of the sensor module. The tube is restricted to rotation within the plane including the trapezoidal cross-section by a pin fixed to the sleeve bearing for slidably engaging a ball portion of the ball and socket joint.

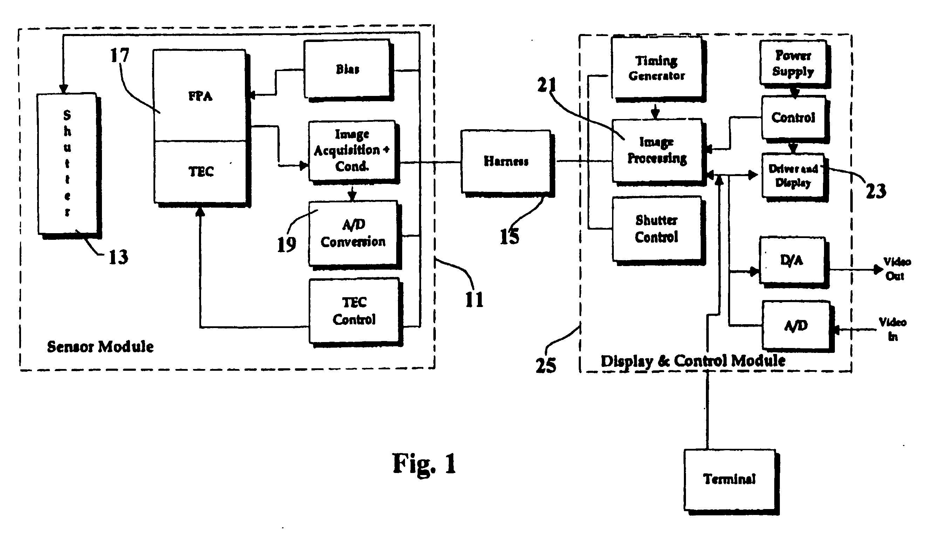

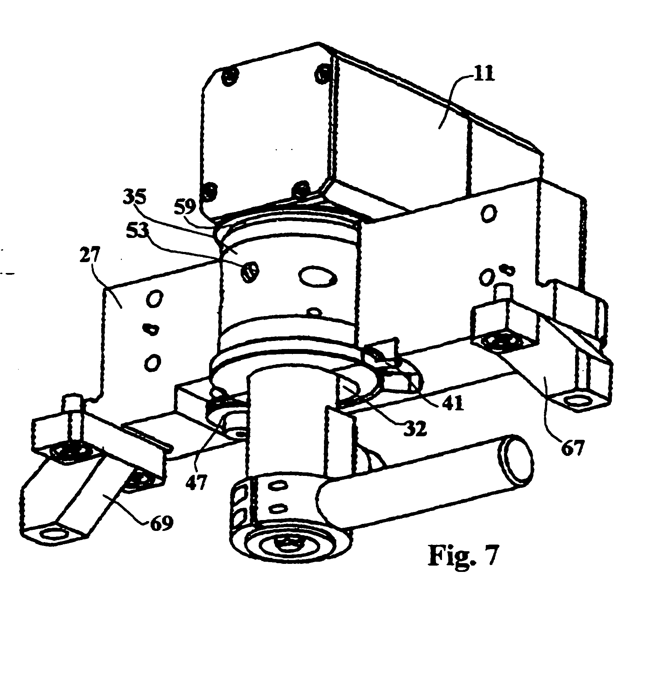

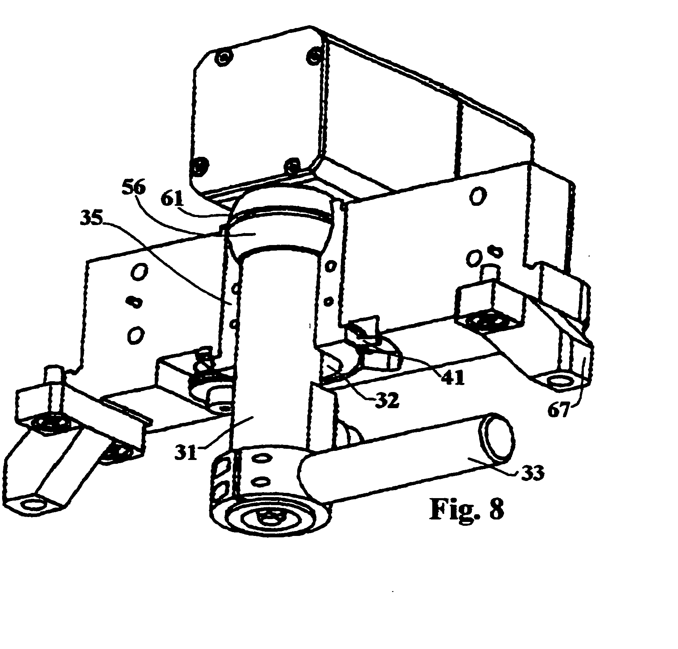

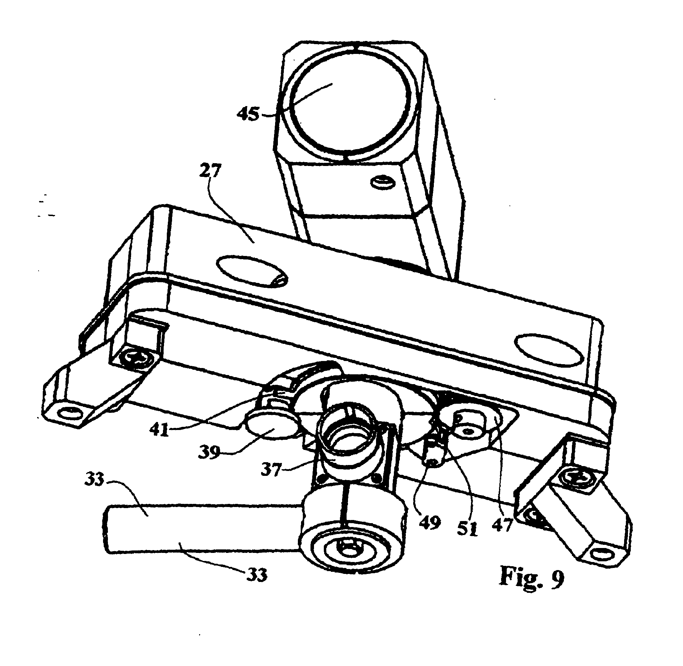

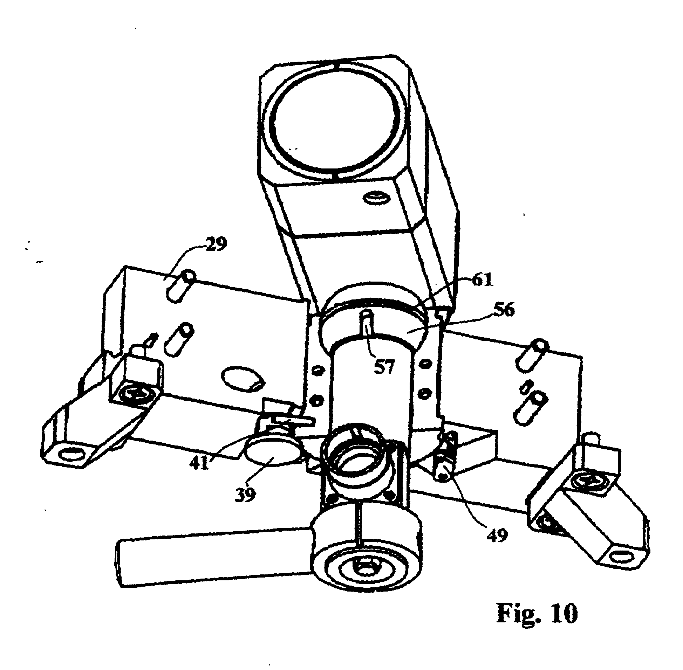

The mounting and control system for an optical imaging device according to the invention is explained in detail by means of the examples illustrated in basic diagrams in Figures 1 to 10.

A more complete appreciation of the invention and many of the attendant advantages thereof will be readily obtained as the same becomes better understood by reference to the following detailed description when considered in connection with the accompanying drawings, wherein :
Figure 1 is a schematic diagram of an optical imaging system;
Figure 2 is an isometric view of the mounting and control system of the present invention in a stowage position;
Figure 3 is an isometric view similar to Figure 2, but depicting the imaging device in the straight forward position;
Figure 4 is a partial cross-sectional view along the lines 4-4 of Figure 3;
Figure 5 is a cross-sectional view along the lines 5-5 of Figure 4;
Figure 6 is a partial cross-sectional view similar to Figure 4, but depicting the imaging device aimed at an increased elevation;
Figure 7 is an isometric view similar to Figure 3, but with one housing portion removed to reveal the sleeve bearing;
Figure 8 is an isometric view similar to Figure 7, but with one portion of the sleeve bearing removed to reveal the elevation ball joint;
Figure 9 is an isometric view of the mounting and control system of the present invention from a different perspective and depicting the imaging device in one preferred extreme azimuth position; and
Figure 10 is an isometric view similar to Figure 9, but with one housing portion and one portion of the sleeve bearing removed to reveal the elevation ball joint.

Referring now to the drawings, where like reference numerals identify the same or corresponding parts throughout the several views, Figures 1 through 10 depict a mounting and control system for an optical imaging system.

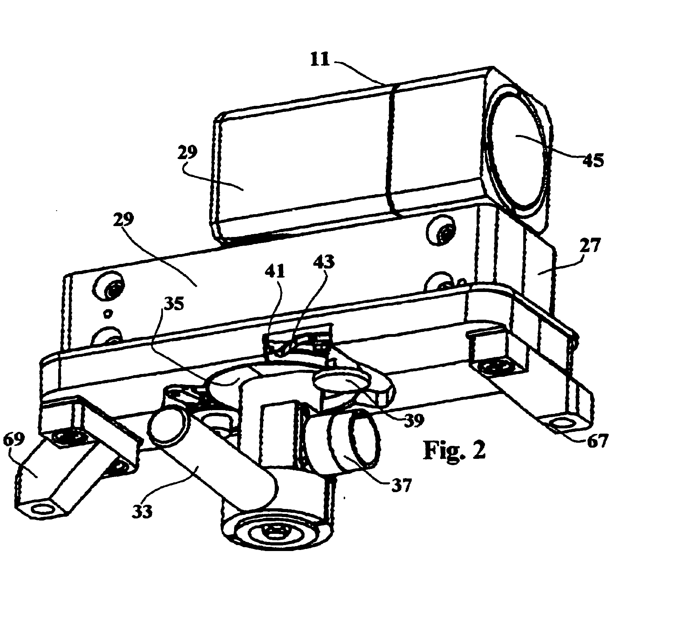

In Figure 1, an optical imaging device includes an infrared light path to the sensor array 17 controlled by shutter 13 in the sensor module or optical imaging device 11. The sensor module is not discussed in detail herein so as not to unnecessarily complicate the present description, but are more completely described in copending US application Serial No. 09/248,507, filed February 10, 1999, published as US 2001/0 045 516 A1 or EP 0 992 773 A. The sensor module 11 includes an optical imaging device having an array of infrared radiation detector cells 17 and an optical system consisting exclusively of refractive optical components, including an objective lens 45 (see Figure 2), for projecting the infrared radiation emanating from a scene onto the array of infrared sensitive cells, and a housing containing the array of cells and the optical system and part of the system electronics. The array information is converted to a digital form at 19 and transmitted from the optical imaging or sensor module 11 to the image processing, display and control module 25 by way of harness 15. Harness 15 includes a modulation-free bidirectional digital communication path and passes through a hollow member depicted in Figures 2-10. The image processing and display module 25 is spaced from the optical imaging device for displaying an image of the scene. After processing by the image processing circuitry 21, the information is displayed at 23. The sensor module 11 is preferably limited to an overall size of approximately 2.5 inch square by 6.0 inch long. Reference to the aforementioned copending application may be had for further details of the electrical components illustrated in Figure 1.

Referring generally to Figures 2-10, the sensor module 11 is supported near the upper end of a hollow tube or support member 31 which extends downwardly through a mounting block or mounting member 27, 29 terminating at a control handle 33. The tube 31 is preferably cylindrical in shape, although alternative shapes can be used, which will be readily apparent to those skilled in the art. The control handle 33 extends orthogonally from the tube 31. The mounting block 27, 29 includes two half portions that are rigidly fixed together and the mounting block 27, 29 is typically fixed to a vehicle by flanges 67 and 69. The interior of the tube 31 houses an image information conveying cable 63 which interconnects the sensor module 11 with the display and control module 25 by way of a further cable (not shown) which connects to the electrical connector 37. The handle 33 provides for control of the positioning of the sensor module 11 by an operator.

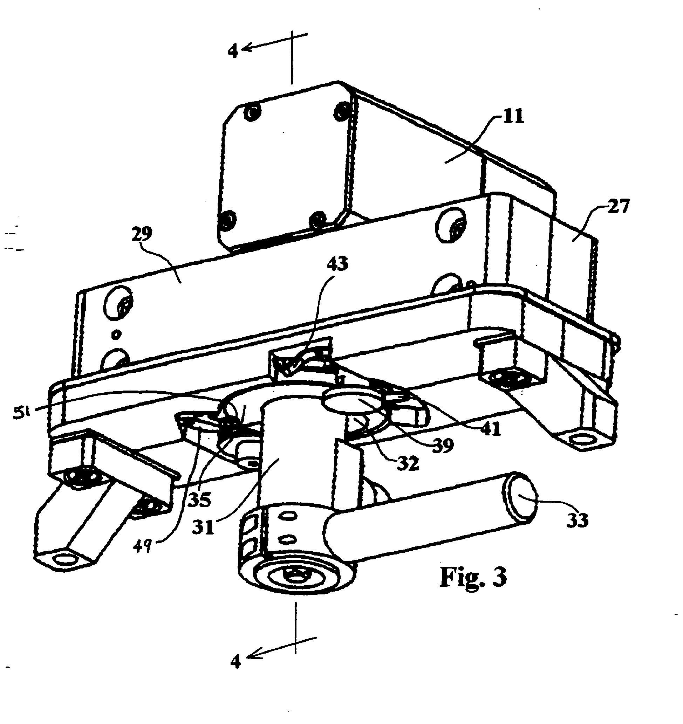

The tube 31 is positioned within a hollow sleeve bearing 35. As will be discussed in more detail below, the tube 31 is prevented from rotating with respect to the sleeve bearing 35 about a vertical axis 30 due to interference between a pin 55 that extends from the sleeve bearing 35 and into a slot 57 on a portion of the tube 31. However, the sleeve bearing 35 is configured to rotate within the mounting block 27, 29 about the vertical axis 30. In the preferred embodiment, the sleeve bearing 35 and, therefore, the sensor module 11 are configured to rotate within the mounting block 27, 29 about vertical axis 30 through slightly more than thirty degrees to either side of a straight forward position (depicted, for example, in Figure 3). Additionally, the sleeve bearing 35 and sensor module 11 are configured to rotate about vertical axis 30 ninety degrees from the straight forward position depicted in Figure 3 to a stowage position depicted in Figure 2. Therefore, in total, the sleeve bearing 35 is free to rotate within the mounting block 27, 29 through a preferred range of about one hundred and twenty degrees about the vertical axis 30, although alternative ranges can extend the freedom of rotation to a full 360 degrees or beyond if desired.

In the preferred embodiment, the range of rotational movement of the sleeve bearing 35 within the mounting block 27, 29 is defined by control stop devices. At least one end stop pin 41 extends from an outer surface of the sleeve bearing 35 and is received within at least one end stop recess 42 in the mounting block 27, 29. The end stop recess 42 restricts the rotation of the sleeve bearing 35 and the sensor module 11 by interfering with and limiting the movement of the end stop pin 41, thereby providing azimuth control stop devices. A portion of the end stop recess 42 includes a releasable latch-type member or leaf spring 43, which is positioned in the end stop recess 42 such that when the sensor module 11 is in the stowage position the pin 41 is engaged with member 43. Once the end stop pin 41 travels into the stowage position, the member 43 prevents or deters the pin end stop 41 from moving out of the stowage position, thereby preventing or deterring the sensor module 11 from rotating about vertical axis 30 out of the stowage position.

In the stowage position, the sensor module 11 is folded within the mounting block 27, 29, which will protect the sensor module 11 during installation in the vehicle, dismounting from the vehicle, or when the sensor module 11 is not in use. An added advantage of the stowage position is that when the sensor module 11 is in this position the objective lens 45 is protected within the protective cowling provided in most vehicles. Note that when the sensor module 11 is in the stowage position the handle 33 is oriented towards the operator, which allows the operator to easily grasp and manipulate the sensor module 10 using the handle 33.

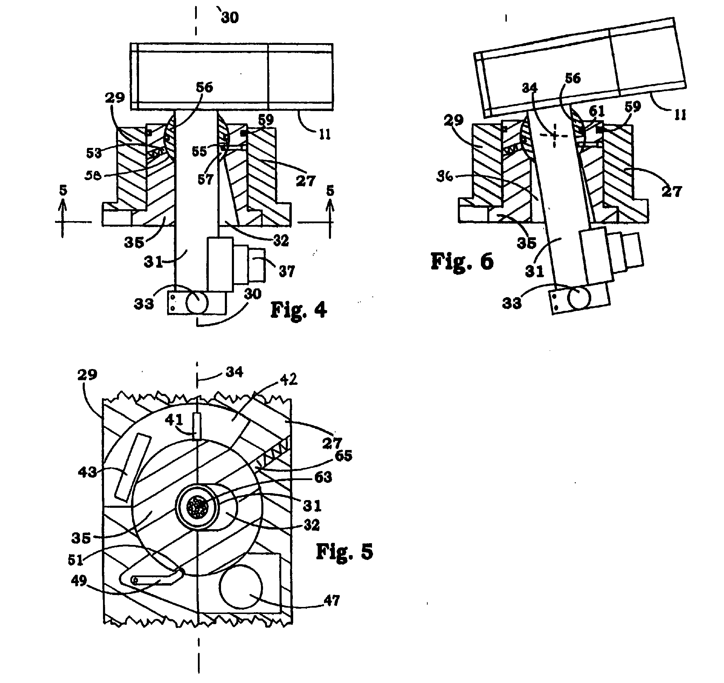

The latch-type member 43 has a release lever or button 39 that, when depressed, allows the end stop pin 41 to move out of the stowage position without interference or with minimal interference from member 43. The button 39 is positioned such that the operator can grasp the handle 33 with one hand and simultaneously actuate the button 39 with the same hand, for example by using the back side of the hand. The sleeve bearing 35 further includes a bearing notch 51, and the mounting block 27, 29 further includes a spring loaded roller 49, which interact to provide a detent neutral or forward position, as depicted in Figures 3 and 5. The spring loaded roller 49 mates with the notch 51 when the sensor module 11 and sleeve bearing 35 are oriented in the straight forward position, thereby providing slight deterrence from rotation at this position. The operator can overcome this deterrence by using the handle 33 to rotate the sleeve bearing 35 and the sensor module 11, thereby forcing the spring loaded roller 49 out from notch 51.

A potentiometer roller mechanism 47 (Figures 5, 7 and 9) is provided on the mounting block 27, 29 that has a rubberlike peripheral surface and is spring loaded against sleeve bearing 35 to give an azimuth directional reading of the sensor module 11. The directional readout may be displayed in a graphical mode on the display 23.

The sleeve bearing 35 is formed in two halves and has a generally cylindrical outer surface and an inner hollow region 36 including a relieved region 32 that allows for the limited pivotal motion of the tube 31 about a horizontal axis 34 within the sleeve bearing 35. This relieved region 32 gives the opening in which the tube 31 resides a race track shaped cross-sectional configuration, as depicted in Figure 5. The inner hollow region 36 is generally depicted in Figure 6 and has rectangular and trapezoidal cross-sectional configurations that extend within two vertical perpendicular planes that intersect along axis 30. The tube 31 is free to pivot within the sleeve bearing 35 in the plane including the trapezoidal cross-section only, thereby providing for elevational adjustment of the sensor module 11.

A ball and socket joint joins the tube 31 and sleeve bearing 35. Such a ball and socket joint is readily adapted to simple sealing techniques, as will be readily apparent to one skilled in the art. The ball and socket joint includes a spherical ball portion 56 that is press-fit onto the tube 31. The spherical ball portion 56 of the tube 31 is received within a recessed spherical socket portion 58 on the interior of the sleeve bearing 35. The ball portion 56 has a slot 57 (as discussed earlier) that engages a pin 55 in the socket portion 58 of the sleeve bearing 35, which prevents the sensor from having pitch rotation. In the preferred embodiment the pin 55 is positioned to extend perpendicularly to axis 34 and in the same direction as the objective lens 45 of the imaging device 11 in order to insure restriction of motion of the imaging device 11 to two perpendicular planes, thereby providing for elevational adjustment (along the plane in which the trapezoidal cross-sectional configuration of the inner hollow region of sleeve bearing 35 extends, and about horizontal axis 34) and rotational adjustment along a horizontal plane about the vertical axis 30.

The sensor module 11 rotates about axis 34 for elevational adjustment and is aided by a friction mechanism 53 (see Figures 4, 6 and 7) for maintaining a selected elevational position of the sensor module 11. Compare Figure 4 where the sensor module 11 is directed substantially horizontally with Figure 6 where handle 33 has been pushed forward and the sensor module has been elevated to nearly its preferred maximum elevation of ten to fifteen degrees. The friction mechanism 53 will provide sufficient friction between the socket portion 58 and the ball portion 56 to maintain the orientation of the sensor module 11 depicted in Figure 6, unless an operator overcomes the friction by moving the handle 33. A friction mechanism 65 (depicted in Figure 5), similar to friction mechanism 53) is implemented for maintaining a selected rotational position of the sensor module 11 about vertical axis 30 by providing friction between the sleeve bearing 35 and the mounting block 27, 29. A seal between the ball portion 56 of the tube 31 and the socket portion 58 of the sleeve bearing 35 is achieved with an O-ring 61. Another O-ring 59 sealingly engages both the sleeve bearing 35 and the cylindrical opening in the mounting block 27, 29.

In summary, the simplicity of this mounting block control adaptor provides simple environmental sealing, easy one hand operation for independent azimuth and elevation controls, and a protective stowage position. The mounting block control adaptor can be used in various applications. It is particularly well suited to for use with a forward looking sensor module in the majority of combat vehicles. The adaptor enables the use of a driver viewer enhancement system in vehicles where there is minimum amount of free space for protrusion and volume inside the vehicle under the mounting block. As will be readily apparent to one of skill in the art, the present invention also readily lends itself to adaptation as a motorized control system with the inclusion of motors for providing rotational and elevational controls and motors or other mechanisms for controlling the release button 39.

Numerous variations of the present invention are possible in light of the above teachings. It is therefore to be understood that within the scope of the appended claims, the present invention can be practiced other than as specifically described herein.

## Claims

1. A mounting and control system for mounting an optical imaging device (11) to a vehicle, comprising a support member (31) having the optical imaging device fixed at an end thereof, a bearing (35) supporting said support member for rotational movement about a horizontal axis, and a mounting member (27, 29) supporting said bearing for rotational movement about a vertical axis, **characterized in that**
the optical imaging device (11) includes an optical system and an electronic detector,
and **in that** it comprises
a ball and socket joint to join together said support member (31) and said bearing (35), to provide rotational movement about the horizontal axis, wherein said bearing has an inner hollow region configured to receive said support member;
a control handle (33) mechanically connected to said support member (31) at an opposite end opposite to the end having the optical imaging device (11) fixed thereto,
an image display module (25) for displaying images obtained by said optical imaging device, said image display module being remote to said optical imaging device,
wherein mounting member (27, 29) for supporting support member (31) is configured to mount said optical imaging device (11) to the vehicle such that said optical imaging system (11) is external to the vehicle and said control handle (33) and said image display module are internal to the vehicle, and wherein said support member defines a passageway comprising a communication path coupling said optical imaging device with said display module.

2. The system of claim 1 wherein:
said bearing (35) has an outer surface that is generally cylindrical in shape; and
said outer surface of said bearing (35) is received within a generally cylindrical opening in said mounting member (27, 29).

3. The system of claim 2, further comprising:
a first O-ring(61) configured to seal said ball and socket joint; and
a second O-ring (59) configured to sealingly engage said outer surface of said bearing within said cylindrical opening in said mounting member.

4. The system of any of the claims 1 to 3, wherein said ball and socket joint comprises:
a ball portion (56) on said support member received within a socket portion (58) on said bearing, said ball portion having a slot (57) extending in a vertical direction; and
a pin (55) fixed to said socket portion and engaging said slot.

5. The system of claim 4, wherein said slot is configured to limit a freedom of rotation of said support member about the horizontal axis.

6. The system of any of the claims 1 to 5, wherein said bearing (35) has an inner hollow region configured to receive said support member (31), said inner hollow region having a generally trapezoidal cross-section extending in a first vertical plane and a generally rectangular cross-section extending in a second vertical plane that is perpendicular to the first vertical plane, and wherein said support member is free to rotate with respect to said bearing in the first vertical plane only.

7. The system of claim 6, wherein said optical imaging device comprises:
an array of infrared radiation detector cells (17);
an optical system consisting exclusively of refractive optical components for projecting infrared radiation emanating from a scene onto said array of infrared radiation detector cells; and
a housing containing said array of infrared radiation detector cells and said optical system.

8. The system of claim 7, further comprising:
a modulation-free bidirectional digital communication path passing through said passageway and coupling said optical imaging device with image processing circuitry and with said image display module.

## Patentansprüche

1. Befestigungs- und Steuersystem zum Befestigen einer optischen Abbildungsvorrichtung (11) an einem Fahrzeug, mit einem Stützglied (31), das die an einem Ende davon befestigte optische Abbildungsvorrichtung aufweist, einem Lager (35), das das Stützglied zur Drehbewegung um eine horizontale Achse stützt, und einem Befestigungsglied (27, 29), das das Lager zur Drehbewegung um eine vertikale Achse stützt,
**dadurch gekennzeichnet, dass**
die optische Abbildungsvorrichtung (11) ein optisches System und einen elektronischen Detektor enthält,
und es Folgendes umfasst:
ein Kugelgelenk zum Miteinanderverbinden des Stützglieds (31) und des Lagers (35), um Drehbewegung um die horizontale Achse bereitzustellen, wobei das Lager einen hohlen Innenbereich aufweist, der zur Aufnahme des Stützglieds konfiguriert ist;
einen Bediengriff (33), der an einem gegenüberliegenden Ende gegenüber dem Ende, das die daran befestigte optische Abbildungsvorrichtung (11) aufweist, mit dem Stützglied (31) verbunden ist,
ein Bildanzeigemodul (25) zur Anzeige von durch die optische Abbildungsvorrichtung erhaltenen Bildern, wobei das Bildanzeigemodul von der optischen Abbildungsvorrichtung entfernt ist,
wobei das Befestigungsglied (27, 29) zum Stützen des Stützglieds (31) zur solchen Befestigung der optischen Abbildungsvorrichtung (11) an dem Fahrzeug konfiguriert ist, dass sich das optische Abbildungssystem (11) außerhalb des Fahrzeugs befindet und sich der Bediengriff (33) und das optische Anzeigemodul innerhalb des Fahrzeugs befinden, und wobei das Stützglied einen Durchgang definiert, der einen Verbindungsweg umfasst, welcher die optische Abbildungsvorrichtung mit dem Anzeigemodul verbindet.

2. System nach Anspruch 1, wobei:
das Lager (35) eine Außenfläche mit einer allgemein zylindrischen Form aufweist; und
die Außenfläche des Lagers (35) in einer allgemein zylindrischen Öffnung in dem Befestigungsglied (27, 29) aufgenommen ist.

3. System nach Anspruch 2, weiterhin mit:
einem ersten O-Ring (61), der zur Abdichtung des Kugelgelenks konfiguriert ist; und
einem zweiten O-Ring (59), der zum abdichtenden Eingriff der Außenfläche des Lagers in der zylindrischen Öffnung in dem Befestigungsglied konfiguriert ist.

4. System nach einem der Ansprüche 1 bis 3, wobei das Kugellager Folgendes umfasst:
einen Kugelteil (56) an dem Stützglied, das in einem Schalenteil (58) am Lager aufgenommen wird,
wobei der Kugelteil einen Schlitz (57) aufweist, der in einer vertikalen Richtung verläuft; und
einen an dem Schalenteil befestigten zapfen (55), der den Schlitz in Eingriff nimmt.

5. System nach Anspruch 4, wobei der Schlitz dazu konfiguriert ist, eine Drehfreiheit des Stützglieds um die horizontale Achse zu begrenzen.

6. System nach einem der Ansprüche 1 bis 5, wobei das Lager (35) einen hohlen Innenbereich aufweist, der zur Aufnahme des Stützglieds (31) konfiguriert ist, wobei der hohle Innenbereich einen allgemein trapezförmigen Querschnitt, der sich in einer ersten vertikalen Ebene erstreckt, und einen allgemein rechteckigen Querschnitt, der sich in einer zweiten vertikalen Ebene erstreckt, die senkrecht zur ersten vertikalen Ebene verläuft, aufweist, und wobei sich das Stützglied bezüglich des Lagers nur in der ersten vertikalen Ebene drehen kann.

7. System nach Anspruch 6, wobei die optische Abbildungsvorrichtung Folgendes umfasst:
eine Anordnung von Infrarotstrahlungsdetektorzellen (17);
ein optisches System, das ausschließlich aus optischen Brechungskomponenten zum Projizieren von von einer Szene stammender Infrarotstrahlung auf die Anordnung von Infrarotstrahlungsdetektorzellen besteht; und
ein Gehäuse, das die Anordnung von Infrarotstrahlungsdetektorzellen und das optische System enthält.

8. System nach Anspruch 7, weiterhin mit:
einem modulationsfreien bidirektionalen Verbindungsweg, der durch den Durchgang verlauft und die optische Abbildungsvorrichtung mit der Bildverarbeitungsschaltungsanordnung und mit dem Bildanzeigemodul verbindet.

## Revendications

1. Système de fixation et de contrôle destiné à la fixation d'un appareil (11) d'imagerie optique sur un véhicule, comportant un élément (31) de support à l'extrémité duquel est fixé l'appareil d'imagerie optique, un palier (35) supportant ledit élément de support en vue d'un mouvement de rotation autour d'un axe horizontal et un élément (27, 29) de montage supportant ledit palier en vue d'un mouvement de rotation autour d'un axe vertical, **caractérisé en ce que**
l'appareil (11) d'imagerie optique comprend un système optique et un détecteur électronique,
et **en ce qu'**il comprend
une liaison à rotule afin de lier ensemble ledit élément (31) de support et ledit palier (35), pour assurer un mouvement de rotation autour de l'axe horizontal, ledit palier présentant une région intérieure creuse configurée pour recevoir ledit élément de support ;
une poignée (33) de contrôle reliée mécaniquement audit élément (31) de support à une extrémité opposée à l'extrémité à laquelle est fixé l'appareil (11) d'imagerie optique,
un module (25) d'affichage d'images destiné à afficher des images obtenues par ledit appareil d'imagerie optique, ledit module d'affichage d'images étant distant dudit appareil d'imagerie optique, l'élément (27, 29) de montage destiné à supporter ledit élément (31) de support étant configuré pour monter ledit appareil (11) d'imagerie optique sur le véhicule de telle sorte que ledit appareil (11) d'imagerie optique soit extérieur au véhicule et que ladite poignée (33) de contrôle et ledit module d'affichage d'images soient intérieurs au véhicule, et ledit élément de support définissant un passage comportant un chemin de communication couplant ledit appareil d'imagerie optique audit module d'affichage.

2. Système selon la revendication 1,
ledit palier (35) présentant une surface extérieure de forme généralement cylindrique ; et
ladite surface extérieure dudit palier (35) étant logée à l'intérieur d'une ouverture généralement cylindrique dans ledit élément (27, 29) de montage.

3. Système selon la revendication 2, comportant en outre :
un premier joint torique (61) configuré pour assurer l'étanchéité de ladite liaison à rotule ; et
un deuxième joint torique (59) configuré pour coopérer de façon étanche avec ladite surface extérieure dudit palier à l'intérieur de ladite ouverture cylindrique dans ledit élément de montage.

4. Système selon l'une quelconque des revendications 1 à 3, ladite liaison à rotule comportant :
une partie sphérique (56) sur ledit élément de support, logée dans une partie (58) de douille dudit pallier, ladite partie sphérique comportant une rainure (57) s'étendant dans une direction verticale ; et
une goupille (55) fixée à ladite partie de douille et s'engageant dans ladite rainure.

5. Système selon la revendication 4, ladite rainure étant configurée de façon à limiter une liberté de rotation dudit élément de support autour de l'axe horizontal.

6. Système selon l'une quelconque des revendications 1 à 5, ledit palier (35) présentant une région intérieure creuse configurée de façon à recevoir ledit élément (31) de support, ladite région intérieure creuse présentant une section droite généralement trapézoïdale s'étendant dans un premier plan vertical et une section droite généralement rectangulaire s'étendant dans un deuxième plan vertical perpendiculaire au premier plan vertical, et ledit élément de support n'étant libre de tourner par rapport audit palier que dans le premier plan vertical.

7. Système selon la revendication 6, ledit appareil d'imagerie optique comportant :
un agencement de cellules (17) détectrices de rayonnement infrarouge ;
un système optique constitué exclusivement de composants optiquement réfringents destinés à projeteur un rayonnement infrarouge émanant d'un lieu sur ledit agencement de cellules détectrices de rayonnement infrarouge ; et
un boîtier contenant ledit agencement de cellules détectrices de rayonnement infrarouge et ledit système optique.

8. Système selon la revendication 7, comportant en outre :
un chemin de communication numérique bidirectionnelle, exempt de modulation, passant à travers ledit passage et couplant ledit appareil d'imagerie optique à une circuiterie de traitement d'images et audit module d'affichage d'images.
